Europäisches Patentamt

**European Patent Office**

**Office européen des brevets**

(19)

Veröffentlichungsnummer: **0 304 618**

**A1**

(12)

# EUROPÄISCHE PATENTANMELDUNG

(21) Anmeldenummer: **88111634.7**

(22) Anmeldetag: **20.07.88**

(51) Int. Cl.⁴: **B60G 17/04**

(30) Priorität: **22.08.87 DE 3728120**

(43) Veröffentlichungstag der Anmeldung:
**01.03.89 Patentblatt 89/09**

(84) Benannte Vertragsstaaten:
**DE FR GB SE**

(71) Anmelder: **ROBERT BOSCH GMBH**
**Postfach 10 60 50**
**D-7000 Stuttgart 10(DE)**

(72) Erfinder: **Breitenbacher, Jürgen, Dipl.-Ing.**
**Rosenstrasse 38**
**D-7065 Winterbach(DE)**
Erfinder: **Kühle, Walter, Dipl.-Ing.**
**Kirschenstrasse 15**
**D-7129 Neckarwestheim(DE)**
Erfinder: **Moennings, Roland**
**Laichinger Strasse 7**
**D-7000 Stuttgart 60(DE)**
Erfinder: **Neumann, Udo**
**Albert-Schweitzer-Strasse 47**
**D-7250 Leonberg 6(DE)**
Erfinder: **Schramm, Wolfgang, Dr.-Ing.**
**Ernst-Bloch-Weg 18**
**D-7000 Stuttgart 30(DE)**

(54) **Pneumatische Federung für Kraftfahrzeuge.**

(57) Es wird eine pneumatische Federung vorgeschlagen, die mit einem Zusatzvolumen ausgerüstet ist. Ein das Zusatzvolumen begrenzender Stellkolben (5) trennt zwei Arbeitskammern (6 und 7) voneinander, die über eine Leitung (8 und 9) und eine Ventileinrichtung (10) voneinander trennbar oder miteinander verbindbar sind.

Bei verbundenen Arbeitskammern (6 und 7) ist die Federrate der Federung kraftlos veränderbar.

Die pneumatische Federung ist für Kraftfahrzeuge bestimmt.

EP 0 304 618 A1

## Pneumatische Federung für Kraftfahrzeuge

### Stand der Technik

Die Erfindung geht aus von einer pneumatischen Federung nach der Gattung des Hauptanspruchs.

Eine solche pneumatische Federung ist bekannt durch die US-PS 23 38 897. Bei dieser bekannten Bauart ist der Stellkolben, mit dem das Zusatzvolumen veränderbar ist, von einem Pendel verstellbar, das bei Kurvenfahrt anspricht. Da der Stellkolen zwei Arbeitskammern voneinander trennt, von denen die eine ein Zusatzvolumen für einen auf der linken und die andere ein Zusatzvolumen für einen auf der rechten Fahrzeugseite angeordneten Federbalg bildet, stellt diese bekannte Einrichtung eine Wankdämpfung dar, welche die Federung der bei Kurvenfahrt jeweils äußeren Fahrzeugseite härter macht, indem der Stellkolben dort das Zusatzvolumen verkleinert.

Eine solche Verstellung erfolgt aber immer unter Last, was große Kräfte erforderlich macht, die vom Stellgestänge aufgebracht werden müssen und die zu einem baldigen Verschleiß führen.

### Vorteile der Erfindung

Die eingangs genannte Federung mit den kennzeichnenden Merkmalen des Hauptanspruchs hat demgegenüber den Vorteil, daß die Verstellung praktisch ohne Kraft erfolgt und für alle Fahrbedingungen möglich ist. Schließlich ist es auch von Vorteil, daß die Federrate unabhängig für jeden einzelnen Balg stufenlos verstellbar ist.

### Zeichnung

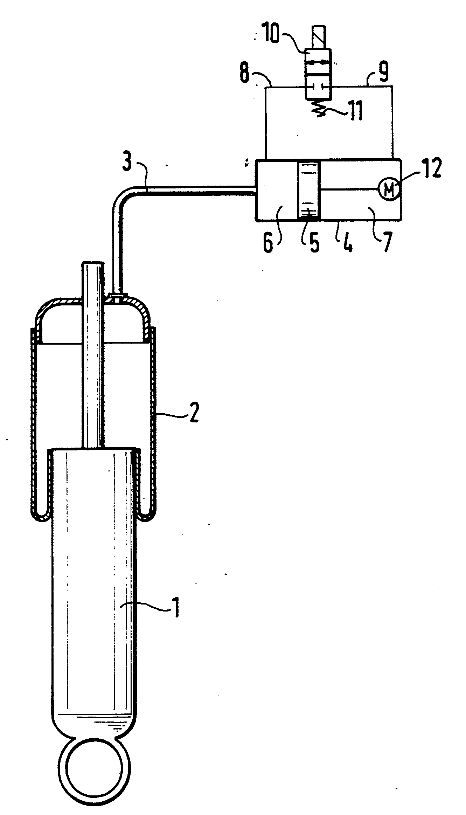

Ein Ausführungsbeispiel der Erfindung ist in der Zeichnung dargestellt und in der nachfolgenden Beschreibung näher erläutert.

### Beschreibung des Ausführungsbeispiels

Ein Stoßdämpfer 1. der zum Einbau zwischen Fahrzeugachse und Wagenaufbau bestimmt ist, ist mit einem Federbalg 2 versehen. der eine nach oben aus dem Stoßdämpfer 1 herausragende Kolbenstange konzentrisch umgibt. An den Federbalg ist eine Luftleitung 3 angeschlossen. die zu einem Arbeitszylinder 4 führt.

Im Arbeitszylinder 4 befindet sich ein Stellkolben 5. der zwei Arbeitskammern 6 und 7 voneinander trennt. Der Stellkolben 5 wird von einem Elektromotor 12 über ein nicht dargestelltes Schneckengetriebe verstellt. Außerhalb des Stellzylinders 4 sind die beiden Arbeitskammern 6 und 7 über eine Leitung 8. 9 miteinander verbunden. in die eine Ventileinrichtung 10 in Form eines 2.2-Wege-Magnetventils eingesetzt ist. Eine Feder 11 sorgt dafür. daß die Ventileinrichtung 10 stromlos geschlossen ist. Die Luftleitung 3 hat lediglich eine Verbindung mit der Arbeitskammer 6 des Arbeitszylinders 4.

Ein Magnet 11 der Ventileinrichtung ist über nicht dargestellte Leitungen an ein elektronisches Steuergerät angeschlossen, das seine Stellbefehle von Höhen-, Last- oder Beschleunigungssensoren des Fahrzeuges erhält.

### Wirkungsweise

Gewöhnlich befindet sich die Ventileinrichtung 10 in ihrer Schließstellung, d.h. die beiden Arbeitskammern 6 und 7 sind voneinander getrennt und der Stellkolben 5 ist weitgehend unbeweglich. Das Zusatzvolumen ist dadurch unveränderlich und die Federrate ist konstant.

Wenn aber infolge sich verändernder Fahrbedingungen das elektronische Steuergerät einen Strom an die Ventileinrichtung 10 liefert. drückt der Magnet das Magnetventil in seine andere Stellung. in der die beiden Leitungen 8 und 9 miteinander verbunden sind. Dann kann der Stellkolben 5 zwischen den beiden Arbeitskammern 6 und 7 über den Elektromotor 12 weitgehend kraftlos verstellt werdem und eine neue Stellung einnehmen. in der das Zusatzvolumen in der Arbeitskammer 6 verändert ist; nach dem Schließen der Ventileinrichtung ist dann eine neue Federrate eingestellt, die dann maßgeblich ist für die Luftfederung.

### Ansprüche

1. Pneumatische Federung für Kraftfahrzeuge mit einem Federbalg, der zwischen einer Fahrzeugachse und einem Wagenaufbau angeordnet ist und der über eine besondere Leitung mit einem zusätzlichen Behälter verbunden ist. dessen Volumen als zusätzliches Federvolumen für den Federbalg dient und in seiner Zusatzgröße mittels eines Stellkolbens veränderbar ist, dadurch gekennzeichnet, daß der Stellkolben (5) zwei über eine Ventileinrichtung (10) miteinander verbindbare oder voneinander trennbare Arbeitskammern (6. 7) begrenzt und daß die an den Federbalg (1) angeschlossene Arbeitskammer (6) bei geöffneter Ventileinrichtung (10) drucklos volumenveränderbar ist.

2. Federung nach Anspruch 1, dadurch gekennzeichnet, daß die Ventileinrichtung (10) ein 2/2-Wege-Magnetventil ist, das unter der Kraft einer Feder (11) seine Schließstellung einnimmt.

3. Federung nach Anspruch 1 oder 2, dadurch gekennzeichnet, daß die Schaltbefehle für die Ventileinrichtung (10) von einem elektronischen Steuergerät über Höhen- oder Lastsensoren oder Vibrationssensoren erstellbar sind.

Europäisches Patentamt

# EUROPÄISCHER RECHERCHENBERICHT

Nummer der Anmeldung

EP 88 11 1634

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 197 317 (BOSCH) <br> * Figur 1; Zusammenfassung; Seite 9, Zeile 2 - Seite 10, Zeile 10 * <br> --- | 1-3 | B 60 G 17/04 |
| A | DE-A-2 604 809 (B.M.W.) <br> * Figuren 2,3 * <br> --- | 1-3 | |
| A,D | US-A-2 338 897 (BOULOGNE et al.) <br> * Figuren 1,3; Seite 2, rechte Spalte, Zeilen 37-60 * <br> ----- | 1 | |

|  | RECHERCHIERTE SACHGEBIETE (Int. Cl.4) |
|---|---|
|  | B 60 G <br> F 16 F |

Der vorliegende Recherchenbericht wurde für alle Patentansprüche erstellt

| Recherchenort | Abschlußdatum der Recherche | Prüfer |
|---|---|---|
| DEN HAAG | 20-10-1988 | TORSIUS A. |